Europäisches Patentamt

European Patent Office

Office européen des brevets

(19)

(11) Publication number: 0 289 772
A1

(12) # EUROPEAN PATENT APPLICATION

(21) Application number: 88104751.8

(51) Int. Cl.⁴: A01K 1/01 , B65G 25/10

(22) Date of filing: 24.03.88

(30) Priority: 07.05.87 IT 3484887 U

(43) Date of publication of application:
09.11.88 Bulletin 88/45

(84) Designated Contracting States:
AT BE CH DE ES FR GB GR LI LU NL SE

(71) Applicant: TECNOFER DI MASSARI ORESTE &
C. S.N.C.
Via Geminiola, 7
I-42015 S. Martino Piccolo di Correggio
(Reggio Emilia)(IT)

(72) Inventor: Massari, Oreste
via Geminiola, 7
I-42015 S. Martino Piccolo di Correggio(IT)

(74) Representative: Lecce, Giovanni
Dott. Giovanni Lecce & C. S.r.l. Via G. Negri
10
I-20123 Milano(IT)

(54) Conveyor for animal droppings.

(57) A hydraulic piston (1) is set out lengthwise in a seat (2) flanking a channel (3) in which animal droppings are unloaded. The piston (1) includes a front rod (4) with a plunger (5) which, sliding on longitudinal guides (6) and by means of a mobile side blade (8), pivoted to its front edge (7) and orientated in such a way that its free end (9) enters into an adhering and sliding relationship with the opposite wall of the channel (3), conveys the animal droppings towards a nonreturn valve (12) which is opened in the active thrust phase and is closed in the return phase of the piston.

Fig.2

## "CONVEYOR FOR ANIMAL DROPPINGS"

This invention deals with a conveyor for animal droppings including a hydraulic ram connected coaxially, at its front end, to a guided plunger, essentially square in shape, which slides with reciprocating motion in alignment with a pipe equipped with a nonreturn valve. On a side corner at the upper end of said plunger is pivoted a mobile side blade, conveyor, which, during the active forward stroke, performs a forward rotation sliding on its free side along the sloping wall of a side channel which connects with the opening of said nonreturn valve, whereas during the passive return stroke, it remains bent forward until its lower tooth knocks against a fixed block, thus causing its backward rotation.

Said piston is coupled to a traditional reciprocating motion feed chain, whereas the nonreturn valve is composed of a square opening with a mobile diaphragm made up of several gores, converging on the centre, and constrained to the circumference by a return spring.

As is known, the present plants convey the animal droppings from the discharge gutters in the stables to an outside stocking area, or dung heap, using various systems, such as, for example, chain conveyors with a revolving or oleopneumatic elevator, or a system using an oleodynamic press.

Though the plants using conveyors are extremely simple and inexpensive, they do, nonetheless, have considerable limi tations of use in as much as they may only be employed for short distance transportation from the stables, in a straight line, and are not able to stack into heaps, even if the elevator is moved, since it is not possible to go beyond the height of the elevator itself.

The plants with an oleodynamic press, high power, horizontal or vertical, do not, on the other hand, have any limits of capacity, distance, direction and stacking, in as much as the outlet is usually composed of a tubular pipe, positioned vertically, its size depending on the power installed to obtain a jet which permits sufficient stacking.

Nonetheless, these plants with a press, though they have high qualities and capacity, have the drawback of being very expensive and considerably lengthy installation times; moreover, they are somewhat cumbersome and require a lot of additional works which are also expensive.

Other realizations also include the use of conveyors in which the thrust on the animal droppings, just for the dung, is carried out using a mobile blade which is placed mechanically through the funnel shape of the conveyor. However, this solution has the serious drawback that the mobile blade, subjected to continuous stress and prolonged use, often becomes warped, thus making the operation futile.

Moreover stacking of the droppings occurs at a very short range. The aim of this invention of industrial utility is to eliminate the above-mentioned drawbacks.

The invention, as it is set out in the claims, solves the problem by means of a conveyor for animal droppings with which the following results are obtained : the hydraulic piston or plunger works in alignment with the nonreturn valve, whereas the mobile side blade just has to push the animal droppings into the path of the plunger itself; the nonreturn valve is opened simply by means of the thrust of the animal droppings subjected to the action of the plunger, and is reclosed automatically when the plunger itself starts the return stroke; the pipe, downstream of the check valve may be of any length, development, slope or direction, even upwards at a height much greater than that of the control piston.

The advantages brought by the present invention consist mainly in the fact that, due to the fact that the piston with the plunger and pipe equipped with nonreturn valve are all arranged in line, the control is subjected to decidedly limited stress without any side moment ; the nonreturn valve permits retention of all the animal droppings pushed into the pipe and their expulsion towards the outside at each active stroke of the hydraulic piston, regardless of whether the distance is short or long, straight or winding, and of the orientation of the discharge pipe; the manufacturing costs of the plant, according to the above specifications, are decidedly minimal and advantageous for any farming concern even of small proportions.

The invention is described heretofore in detail making reference to the enclosed drawing in which :

Figure 1 shows a plan of the conveyor in its receding position at the end of return stroke and/or beginning of feed stroke.

Figure 2 shows a plan of the conveyor in its forward position at end of feed stroke and/or beginning of return stroke.

Figure 3 shows a front view with the nonreturn valve closed and a side view with the valve semi-open.

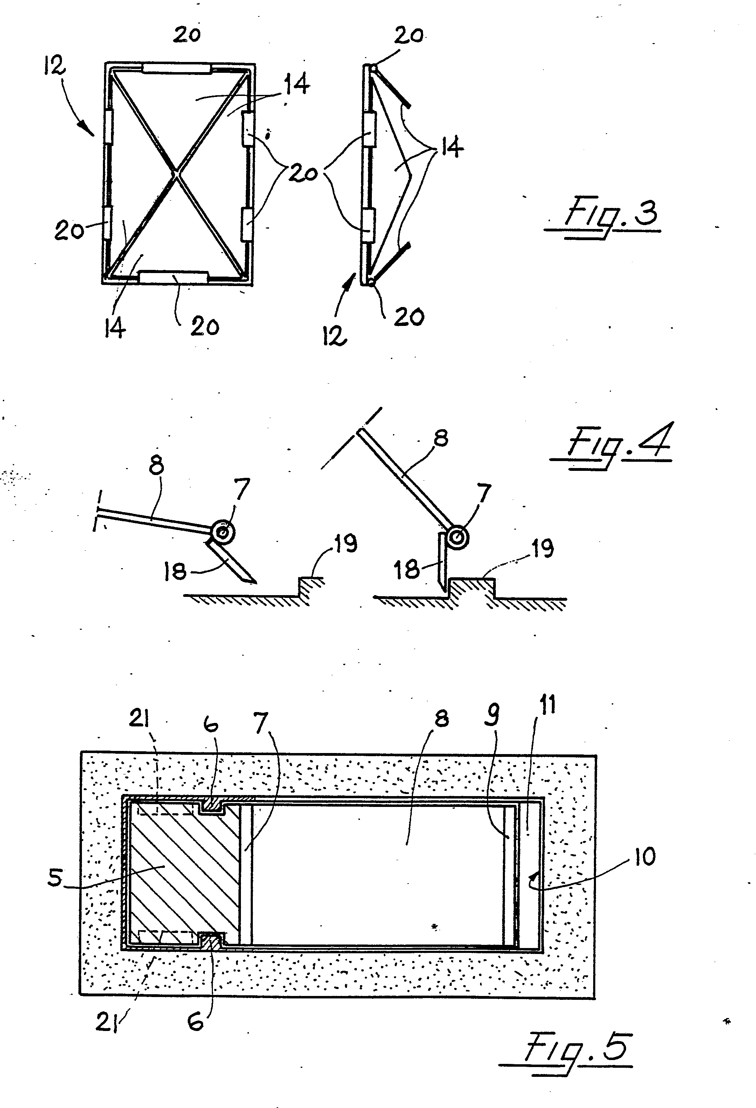

Figure 4 shows the means of rotation for resetting the position of the mobile side blade and

Figure 5 shows a cross-section view of the conveyor, taken in the direction of the arrows A-A of figure 1.

The drawings show a conveyor for animal droppings, comprising mainly a hydraulic piston (1) set lengthwise in a seat (2) realized sideways, and a channel (3) in which are conveyed animal droppings. At the front end, the rod (4) of the piston (1) is connected to a plunger (5), essentially square in shape, sliding on longitudinal guides (6). The plunger (5), aligned with the piston (1), has, on its upper front corner facing the channel (3), a pivot (7) on which revolves a mobile side blade (8), whose outer free end (9) is rounded and, on the active stroke, adheres to and slides along the inside wall (10) of the end part of the channel (3) and the sloping wall (11) of the connecting area of the channel (3) itself with the nonreturn valve (12).

Coupled with the piston (1) action, in the channel (3) is set a conventional feed chain (13) with reciprocating motion. During the working phase, the piston (1) starts its active stroke by pushing its rod (4) forward and, consequently, directing the plunger (5) towards the outlet of the nonreturn valve (12).

During the advancing phase, the mobile blade (8), adhering to and slipping along the inner walls (10) collects and conveys the droppings present in that section of the channel towards the outlet of the nonreturn valve (12), in alignment with the plunger (5).

Under the thrust produced by the plunger (5) on the animal droppings, the mobile diaphragms (14) of the nonreturn valve (12) are opened and the droppings themselves, present in the area (15), are pushed into the discharge pipe (16).

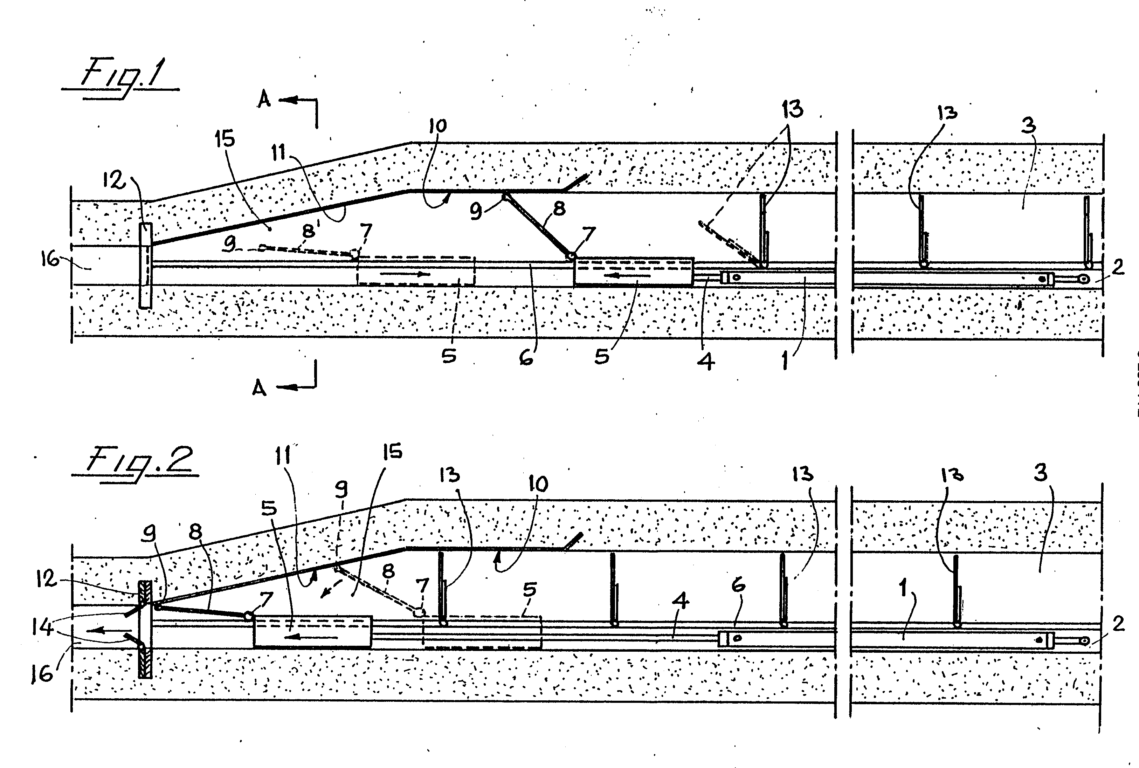

At the same time, the blades (13) of the feed chain, advance, dragged along by the plunger (1) and fill the area (15) with fresh droppings, once it has been freed by the mobile side blade (8). In the following return phase of the piston (1), and the plunger (5); the mobile diaphragms (14) of the nonreturn valve, no longer coerced by the above mentioned thrust, are automatically closed under the action of their return springs (20), preventing the droppings introduced into the discharge pipe (16) from returning, while the mobile blade (8) rests supine in the position indicated in figure 1 by the N° (8'), corresponding to the position assumed at the end of the feed stroke, and while the blades (13) are inclined, finding resistance in the droppings present in the channel (3) to resume subsequently their perpendicular position at the end of the return phase and the beginning of the subsequent active stroke.

When the return stroke is coming to an end, the lower tooth (18), forming an integral part of the pivot (7) of the mobile side blade (8), knocks against the retainer (19) which, offering resistance, cause the rotation of the whole blade (8), bringing it back to is working position with the free end (9) adhering to the inner wall (10) of the channel (3)

In this manner, droppings pushed forward by the blades (13) are collected in front of the side mobile blade (8), which, in its subsequent active phase, may exert its conveying action by bringing them in front of the plunger (5) and the outlet of the nonreturn valve (12).

During the following alternate phases, a certain quantity of animal droppings is continually collected in the discharge pipe (16) without the possibility of their being pushed back into the channel (3), thanks to the presence of the nonreturn valve (12). In this manner, the droppings present in the pipe (16) may be unloaded in any place even though it may be far from the conveyor, regardless of whether its path is straight or twisting, or of the height of its discharge door, not shown, which may be orientated also at a level much higher than that of the conveyor itself.

The nonreturn valve (12), here illustrated in a preferred embodiment, both simple and economic, may also have a different number of segments or diaphragms (14), oriented in convergency towards the center of the seat of the valve itself on a peripheral structure of different geometry, but still equipped with a return spring (20) which causes the automatic closure each time the thrust produced by the piston (1) is suspended.

The plunger (5), followed its reciprocating working motion, slides along the longitudinal guides (6) essentially lubricated by the same liquid substances contained in the animal droppings conveyed ; as an alternative, however, it may be equipped with suitable buffers (21) made of self-lubricating material.

## Claims

1) Conveyor of animal droppings characterized by the fact that it includes a hydraulic piston (1), set lengthwise in a seat (2) flanking a channel (3), on the front rod (4) of which is connected a plunger (5), sliding alternatively on longitudinal guides (6), aligned with a nonreturn valve (12), coaxial with a discharge pipe (16); said plunger being equipped with a conveying mobile side blade (8), pivoted at its front side edge (7) and orientated in such a way that its free end (9), during the active stage, adheres to and slides along the inner wall (10) of the straight end part and along the sloping wall (11) of the area connecting the channel (3) with the valve (12).

2) Conveyor according to claim 1 characterized by the fact that the piston (1), plunger (5), valve (12) and pipe (16) are on the same axis.

3) Conveyor according to claims 1 and 2, characterized by the fact that the mobile side blade (8) constitutes the conveying element of the animal droppings, present in the channel (3), in front of the plunger (5).

4) Conveyor according to claim 1, characterized by the fact that the nonreturn valve (12) is composed of a series of diaphragms (14), orientated in convergence towards the centre of the seat of the valve itself, and connected to the peripheral structure by means of a return and closure spring (20); the opening of the diaphragms (14) depending on the thrust of the plunger (5) on the animal droppings present in the area (15) in front of the valve itself.

5) Conveyor according to claim 1, characterized by the fact that it is coupled to a feed chain (13) equipped with self-inclining blades.

6) Conveyor according to claim 1, characterized by the fact that the mobile side blade (8) is equipped with means of rotation and straightening (19).

7) Conveyor according to claim 1, characterized by the fact that the plunger (5), sliding along longitudinal guides (6) is equipped, or not, with buffers made of self-lubricating friction material.

8. Conveyor of animal droppings according to the former claims, as illustrated and described and for the specified purposes.

0 289 772

## Fig.1

## Fig.2

_Fig.3_

_Fig.4_

_Fig.5_

| | DOCUMENTS CONSIDERED TO BE RELEVANT | | EP 88104751.8 |
|---|---|---|---|
| Category | Citation of document with indication. where appropriate, of relevant passages | Relevant to claim | CLASSIFICATION OF THE APPLICATION (Int. Cl 4) |
| Y | WO – A1 – 84/02 055 (TOLIMA)<br>* Fig. 1 *<br>-- | 1-3 | A 01 K  1/01<br>, B 65 G  25/10 |
| Y | DE – A1 – 2 615 130 (ALFA)<br>* Fig. 3; page 8, lines 12-15 *<br>-- | 1-3 | |
| A | DE – A1 – 2 646 974 (DE ERVEN)<br>* Fig. 4; page 5, last line *<br>-- | 1 | |
| A | DE – B – 1 533 819 (STEINKOPF)<br>* Column 1, lines 29-34 *<br>----- | 4 | |
| | | | **TECHNICAL FIELDS SEARCHED (Int. Cl.4)**<br><br>A 01 K<br>B 65 G |

The present search report has been drawn up for all claims

| Place of search<br>VIENNA | Date of completion of the search<br>04-08-1988 | Examiner<br>BAUMGARTNER |
|---|---|---|